# EUROPEAN PATENT SPECIFICATION

(11) **EP 0 858 431 B1**
(45) Date of publication and mention of the grant of the patent: **19.01.2000**
(21) Application number: 96938608.5
(22) Date of filing: 30.10.1996
(51) Int. Cl.: C01G 3/10

(54) **A METHOD FOR PRODUCING COPPER SULPHATE MONOHYDRATE**
VERFAHREN ZUR HERSTELLUNG VON KUPFERSULFAT MONOHYDRAT
PROCEDE DE PRODUCTION DE MONOHYDRATE DE SULFATE CUIVRIQUE

(30) Priority: 30.10.1995 SK 1356
(43) Date of publication of application: 19.08.1998
(73) Proprietor: Chemasol Spol. S.R.O., 941 01 Banska Bystrica (SK)
(72) Inventor: BENEDIKOVA, Eleonora, 974 00 B. Bystrica (SK); MEDZO, Andrej, 974 02 Banska Bystrica (SK)
(74) Representative: Jeck, Anton, Dipl.-Ing.
(86) International application number: SK9600016
(87) International publication number: WO9716379

(56) References cited:
- EP-A- 0 053 719
- US-A- 3 400 027
- DATABASE WPI Section Ch, Week 7611 Derwent Publications Ltd., London, GB; Class E32, AN 76-19453X XP002022910 & JP,A,51 010 195 (HITACHI CHEMICAL KK) , 27 January 1976

## Description

### BACKGROUND OF THE INVENTION

### Field of the Invention

The present invention relates to a method of producing copper sulphate monohydrate from copper waste by wasteless technology.

### Description of the Related Art

Copper sulphate is a highly important technical raw material and is exploitable in various industrial and agricultural fields, such as ore treatment - as a flotation regulator, surface treatment of metals, sprays in agriculture, the textile industry - cloth printing, the treatment of water. Currently, only copper sulphate pentahydrate has been used. Its present production is very expensive and time-consuming, because of crystallization. The resultant product contains five molecules of water and 25.45% of copper.

### SUMMARY OF THE INVENTION

The unsatisfactory state described above is significantly improved by the method of producing of copper sulphate monohydrate according to the present invention, which is based on the fact that diluted sulphuric acid reacts with copper while hydrogen peroxide is used as a catalyst. The copper reacts with the acid as follows:

Cu + H₂SO₄ = CuO + SO₂ + H₂O

SO₂ + H₂O = H₂SO₃

H₂SO₃ + H₂O₂ = H₂SO₄ + H₂O + heat

CuO + H₂SO₄ = CuSO₄ + H₂O

When copper reacts with acid, a temperature of 65-80°C and the presence of oxygen are necessary. When using hydrogen peroxide, these requirements are fulfilled as the reaction is strongly exothermic and the peroxide is decomposed as follows:

H₂O₂ = H₂O + 1/2 O₂ + heat

The suggested technology does not produce any waste products. The technological process, which is the subject of this protection, is a significant contribution based on the fact that it is a more economically convenient method of producing copper sulphate and it achieves better parameters. The final product manufactured by the suggested process results in better characteristics and parameters than those achieved by the technologies of producing copper sulphate pentahydrate.

### DESCRIPTION OF THE PREFERRED EMBODIMENT

Small pieces of metallic copper waste are leached under agitatation with 10% acid in a leaching tank with a conical bottom. A sulphuric acid solution (3580 l of water and 279 kg of concentrated sulphuric acid) is prepared in the tank. Then, copper waste is slowly added to the acid solution while, simultaneously, hydrogen peroxide (33%) is added as a catalyst in small amounts. The reaction is strongly exothermic and therefore heating the tank is not necessary. Leaching is performed until the solution has a constant pH (5.0 to 5.5). When the pH of the solution has been stabilized, this shows that all the free acid has reacted. In total 380 kg of copper and 343 1 of 33% hydrogen peroxide were used. The resultant lixivium is left to settle and an analysis sample is taken - the required concentration is Cu=100g/l. The lixivium is decanted into an intermediate tank after settling. The solution has a typical blue colour. After decanting the lixivium, the acid is prepared in the leaching tank and the whole process is repeated. After leaching no dregs remain in the tank, only unreacted metal waste remains. The solution from the intermediate tank is filtered through a mud-press into a pre-concentrating tank. Concentrating is provided by heating, evaporating and pumping of the new solution. The required concentration of copper is 150g/l. It is necessary to maintain a temperature of 60-70°C. The solution is dosed by a material-dosing pump from the pre-concentrating tank into a drying chamber where the input solution is conducted into a dusting assembly. The said assembly sprays the solution at high revolution through jets onto the walls of the drying chamber. The generated product is hammered by hammers from the walls and sucked with a blower through a cyclone into a reservoir. The waste steam is removed through a chinney. The input temperature of the drying chamber is maintained at 230°C and the output temperature at 110°C.

### Industrial Exploitation

The present invention is exploitable in fluid and gas drying, wood preservation, the dye industry, viticulture, medical purposes, the treatment of water, and the manufacturing of other copper products.

## Claims

1. A method of producing of copper sulphate monohydrate by the leaching of metal waste in sulphuric acid characterized by the fact that 33% hydrogen peroxide is added as a catalyst to the diluted sulphuric acid and the solution obtained with a Cu concentration of 100g/l is dried at a temperature of 230°C after filtration and thickening to concentration Cu 150g/l.

## Patentansprüche

1. Verfahren zur Herstellung von Kupfersulfat-Monohydrat durch Zugabe von Metallabfall in Schwefelsäure,
dadurch gekennzeichnet,
daß 33% Wasserstoffperoxid als Katalysator zu einer verdünnten Schwefelsäure zugegeben wird und daß die sich mit einer Kupferkonzentration von 100 g/l ergebende Lösung gefiltert, bis zu einer Kupferkonzentration von 150 g/l eingedickt und dann bei einer Temperatur von 230 °C getrocknet wird.

## Revendications

1. Procédé de production de monohydrate de sulfate cuivrique par lixiviation de déchets métalliques dans de l'acide sulfurique,
caractérisé
par le fait que du peroxyde d'hydrogène à 33 % est additionné en tant que catalyseur à de l'acide sulfurique dilué et que la solution obtenue d'une concentration en Cu de 100 g/l est, après filtration et épaississement jusqu'à une concentration en Cu de 150 g/l, séchée à une température de 230°.
